# FASCICULE DE BREVET EUROPEEN

(11) **EP 0 922 842 B1**
(45) Date de publication et mention de la délivrance du brevet: **20.08.2003**
(21) Numéro de dépôt: 98403003.1
(22) Date de dépôt: 01.12.1998
(51) Int. Cl.: F02C 7/047, B64D 15/04, F16L 3/16

(54) **Diffuseur d'air chaud pour capot d'entrée d'air de moteur à réaction à circuit de dégivrage**
Heissluftdiffusor für die Lufteinlasshaube eines Strahltriebwerkes mit Enteisungskreislauf
Hot air diffuser for jet engine intake fairing with de-icing circuit

(30) Priorité: 12.12.1997 FR 9715749
(43) Date de publication de la demande: 16.06.1999
(73) Titulaire: AIRBUS FRANCE, 31060 Toulouse (FR)
(72) Inventeur: Porte, Alain, 31770 Colomiers (FR)
(74) Mandataire: Bonnetat, Christian

(56) Documents cités:
- EP-A- 0 091 345
- EP-A- 0 376 371
- CH-A- 562 980
- US-A- 5 390 878

## Description

La présente invention concerne le dégivrage ces capots d'entrée d'air de moteurs à réaction, notamment des moteurs d'aéronefs.

On sait que, en cas de besoin (prévention contre la formation de givre ou élimination de givre déjà formé), le bord d'attaque du capot d'entrée d'air de tels moteurs est dégivré par réchauffement par de l'air chaud sous pression, prélevé sur ledit moteur et amené audit bord d'attaque par un circuit de circulation d'air chaud.

A cet effet, un tel capot d'entrée d'air comporte :
- un bord d'attaque creux délimitant une chambre périphérique annulaire interne, fermée par une cloison interne (ou cadre) et pourvue d'au moins un orifice mettant en communication ladite chambre interne avec l'extérieur ; et
- une conduite, apte à être raccordée, à son extrémité arrière opposée audit bord d'attaque, audit circuit de circulation d'air chaud et, à son extrémité avant vers le bord d'attaque, à des moyens d'injection injectant ledit air chaud sous pression dans ladite chambre interne.

Ainsi, l'air chaud sous pression injecté par lesdits moyens d'injection parcourt ladite chambre annulaire interne en la réchauffant et est évacué à travers ledit orifice.

Lesdits moyens d'injection peuvent se présenter sous la forme d'injecteurs à une ou plusieurs buses d'injection ou bien encore, comme cela est par exemple mentionné dans les documents EP-A-0 536 089 ou US-A-5 390 878, sous la forme d'un diffuseur constitué par une tuyauterie annulaire circulaire logée dans ladite chambre annulaire interne et pourvue d'une pluralité d'orifices (éventuellement pourvus de buses d'injection), répartis le long dudit diffuseur et injectant ledit air chaud sous pression dans ladite chambre annulaire interne.

Dans les capots d'entrée d'air connus, pourvus d'un tel diffuseur, la fixation de ce dernier à l'intérieur de ladite chambre annulaire est obtenue :
- à l'aide d'une multitude de tiges qui, pour pouvoir accepter les dilatations thermiques sans engendrer des contraintes importantes dans les structures de fixation, ont un diamètre réduit de l'ordre de 1 mm, ce qui les rend fragiles. De plus, ce mode de fixation exige la fabrication et l'assemblage de nombreuses pièces, avec des réglages longs et délicats. Par ailleurs, les liaisons des tiges avec lesdites structures sont difficiles à fabriquer et surtout à réparer. Ce mode de fixation à tiges est donc onéreux ;
- ou bien à l'aide d'une multitude de bielles articulées. Cependant, la reprise des charges inertielles dans toutes les directions, qui doit assurer des degrés de liberté pour les dilatations thermiques, nécessite :
   - différents types de bielles, à deux ou croîs rotules ;
   - un nombre élevé de chapes (de l'ordre de 20) soudées sur le diffuseur ;
   - un nombre élevé de fixations, axes, vis, etc ... nécessaires pour assembler les bielles articulées.
   Le mode de fixation à l'aide de bielles articulées est donc onéreux à fabriquer, à assembler et à régler. De plus, il est très sensible aux vibrations et aux ruptures en fatigue. Il nécessite donc de nombreuses interventions en service pour remplacer des pièces endommagées. Enfin, il est lourd ;
- ou bien encore, à l'aide de plaques flexibles solidaires de chapes soudées sur le diffuseur. L'utilisation de telles plaques flexibles améliore le comportement en vibrations du mode de fixation à l'aide de bielles articulées. Cependant, l'utilisation de chapes soudées sur le diffuseur bloque à une position angulaire précise la fixation des plaques flexibles, ce qui rend ce mode de fixation très hyperstatique et donc très difficile à fabriquer et à monter. Il doit donc être monté sous contraintes et il transmet la chaleur et les vibrations du diffuseur dans les plaques flexibles et les structures environnantes.

La présente invention a pour objet de remédier à ces inconvénients.

A cette fin, selon l'invention, le capot d'entrée d'air pour moteur à réaction, notamment pour aéronef, ledit capot d'entrée d'air étant pourvu de moyens de dégivrage de son bord d'attaque et comportant à cet effet :
- un bord d'attaque creux délimitant une chambre périphérique annulaire interne, fermée par une cloison interne et pourvue d'au moins un orifice mettant en communication ladite chambre interne avec l'extérieur ; et
- une conduite, apte à être raccordée, à son extrémité arrière opposée audit bord d'attaque, à un circuit d'air chaud sous pression et, à son extrémité avant vers ledit bord d'attaque, à un diffuseur constitué par une tuyauterie annulaire logée dans ladite chambre annulaire interne et pourvue d'une pluralité d'orifices, répartis le long dudit diffuseur et injectant ledit air chaud sous pression dans ladite chambre annulaire interne,
est remarquable en ce que :
- ledit diffuseur est constitué de tronçons rectilignes raccordés entre eux par des coudes pour donner à ladite tuyauterie une forme annulaire polygonale ;
- ledit diffuseur est fixé à l'intérieur de ladite chambre annulaire interne par des pattes de support plates réalisées en une matière élastique, chaque patte de support étant fixée à son extrémité arrière à ladite cloison interne et étant reliée à son extrémité avant à un desdits tronçons rectilignes de ladite tuyauterie annulaire polygonale ;
- chaque patte de support plate a une direction au moins sensiblement orthogonale à l'axe dudit tronçon rectiligne auquel elle est reliée et est disposée de façon que son plan soit au moins sensiblement parallèle audit axe dudit tronçon ; et
- l'extrémité avant de chaque patte de support est reliée au tronçon rectiligne correspondant de ladite tuyauterie annulaire polygonale par une articulation à rotule.

Ainsi, la faible épaisseur desdites pattes favorise la flexibilité de l'ensemble dans le plan du diffuseur, tandis que la largeur desdites pattes assure la rigidité latérale requise.

On comprendra aisément que :
- grâce à la déformation élastique des pattes flexibles, par exemple réalisées en un acier à ressort, on assure les déplacements pour expansion thermique dudit diffuseur, sans jeu fonctionnel. On peut donc supprimer les axes d'articulation et les visseries associés de la technique antérieure, qui sont sources de vibrations et augmentent la masse et le coût du capot d'entrée d'air ;
- grâce aux articulations à rotule, on facilite l'alignement et le montage des pièces, tout en transmettant de façon appropriée les efforts. Le positionnement des pièces est facilité et on peut accepter des tolérances de fabrication et d'assemblage. Par ailleurs, on peut supprimer un nombre important de soudures et il est possible d'utiliser des matériaux faiblement conducteurs de la chaleur et/ou transmettant peu les vibrations. Les articulations à rotule peuvent fournir un effort de serrage permanent du diffuseur, ce qui garantit un bon comportement dans une ambiance vibratoire ;
- grâce au fait que le diffuseur est polygonal, de sorte que chaque articulation à rotule coopère avec un tronçon rectiligne dudit diffuseur, lesdites articulations à rotule peuvent être de conception et de fabrication simples et permettre d'éviter la rotation du diffuseur, tout en le laissant libre en dilatation thermique.

Avantageusement, le plan de chaque patte de support plate passe par l'axe dudit tronçon rectiligne correspondant.

De préférence, chaque articulation à rotule résulte du fait que l'extrémité avant de chaque patte de support comporte une cavité sphérique enserrant une garniture sphérique, enserrant elle-même le tronçon rectiligne correspondant dudit diffuseur. Ainsi, ladite garniture peut être réalisée au moins en partie en une matière thermiquement peu conductrice et/ou amortissant les vibrations, comme par exemple un bronze au béryllium, ce qui isole, en température et en vibrations, les structures environmantes dudit diffuseur, qui se trouve être générateur de chaleur et de vibrations.

Par commodité, ladite cavité sphérique et ladite garniture sphérique sont chacune constituées d'au moins deux parties complémentaires coopérantes. Ladite garniture sphérique peut former, soit un passage cylindrique interne continu dans lequel est serré ledit tronçon rectiligne correspondant dudit diffuseur, soit deux bagues cylindriques espacées, dans lesquelles est serré ledit tronçon rectiligne.

De préférence, le capot d'entrée d'air conforme à la présente invention comporte les particularités complémentaires suivantes :
- l'extrémité arrière desdites pattes de support est fixée soit directement sur ladite cloison interne, soit entre celle-ci et le bord d'attaque ;
- ladite cavité sphérique est formée soit par au moins une partie conformée directement dans l'extrémité avant desdites pattes de support et une partie rapportée à cette dernière extrémité, soit par au moins deux parties toutes deux rapportées à l'extrémité avant desdites pattes de support ;
- lesdites pattes peuvent présenter une raideur longitudinale constante, par exemple du fait qu'elles sont chacune constituées d'une seule lame élastique allongée. Toutefois, notamment pour des raisons d'isolement en vibrations, il peut être intéressant que lesdites pattes de support présentent une raideur longitudinale plus grande à leur extrémité arrière qu'à leur extrémité avant. Ceci peut être obtenu en prévoyant au moins un renfort élastiquement déformable au pied (extrémité arrière) desdites pattes ou bien en réalisant chacune desdites pattes de support par la superposition de plusieurs lames élastiques différentes. Dans ce dernier cas, il est même possible de faire en sorte que ladite raideur croisse progressivement de l'extrémité avant vers l'extrémité arrière desdites pattes de support ;
- pour accroître encore l'isolement en température et/ou en vibrations du diffuseur par rapport à son environnement, il est avantageux que lesdites pattes de support incorporent des éléments thermiquement peu conducteurs et/ou susceptibles d'amortir les vibrations. De tels éléments peuvent être prévus entre les parties constitutives desdites pattes de support, par exemple entre la cavité sphérique de l'extrémité avant et le corps desdites pattes de support ou encore entre les lames superposées constitutives desdites pattes, ou bien enrober totalement ou partiellement lesdites pattes de support (revêtement d'élastomère, tel qu'un silicone).

De ce qui précède, on comprendra aisémant que le nombre de tronçons rectilignes de l'anneau du diffuseur est au moins égal au nombre des pattes de support, mais que, bien entendu, il peut être supérieur, certains desdits tronçons rectilignes n'étant pas supporté par une celle patte.

Les figures du dessin annexé feront bien comprendre comment l'invention peut être réalisée. Sur ces figures, des références identiques désignent des éléments semblables.
La figure 1 montre, en perspective éclatée, un motour d'aéronef à réaction et ses différents capotages.
La figure 2 est une vue en perspective de l'avant, avec arrachement, du capot d'entrée d'air conforme à la présente invention.
La figure 3 est une vue de face du diffuseur d'air chaud conforme à la présente invention.
La figure 4 est une vue de dessus d'une patte de support dudit diffuseur.
La figure 5 est une coupe partielle dudit diffuseur passant par l'axe de ses tronçons rectilignes, selon la ligne V-V de la figure 4.
La figure 6 illustre une variante de réalisation de la rotule, en vue semblable à la figure 5.
La figure 7 montre en vue en élévation la rotule de la figure 6.
La figure 8 est une coupe de ladite rotule, selon la ligne VIII-VIII de la figure 7.
Les figures 9 à 14 illustrent, en coupe longitudinale le long d'une patte de support, différentes variantes de fixation dudit diffuseur.

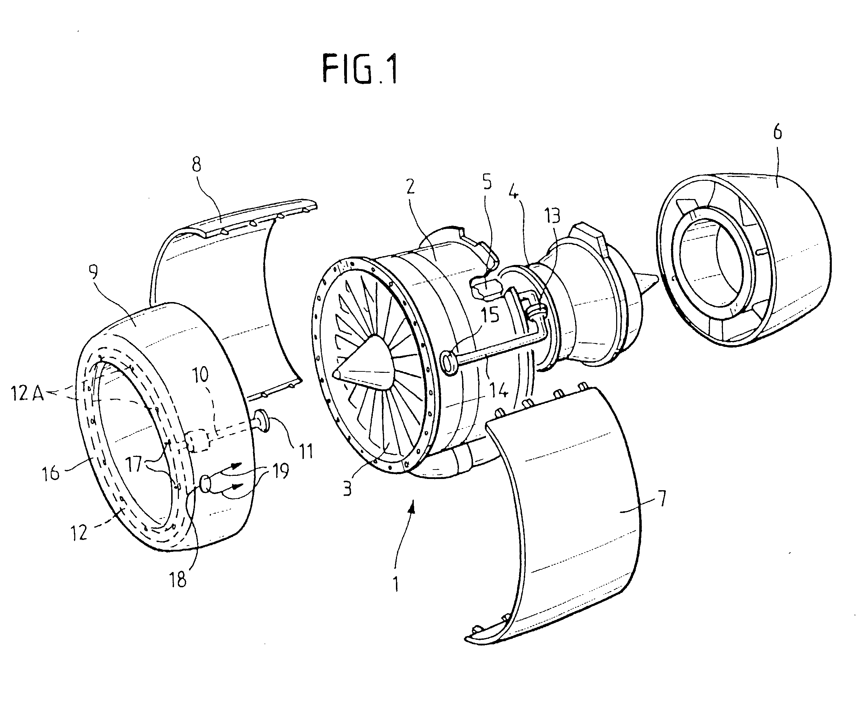

Le moteur à double flux 1 représenté schématiquement sur la figure 1 comporte, de façon connue, un générateur central d'air chaud 2, un ventilateur 3 et des étages de compresseurs 4, et il est pourvu d'une attache 5 de suspension à un mât de support (non représenté). Au moteur 1 sont associés et fixés un ensemble de tuyère 6, deux capots latéraux 7 et 8 et un capot d'entrée d'air 9.

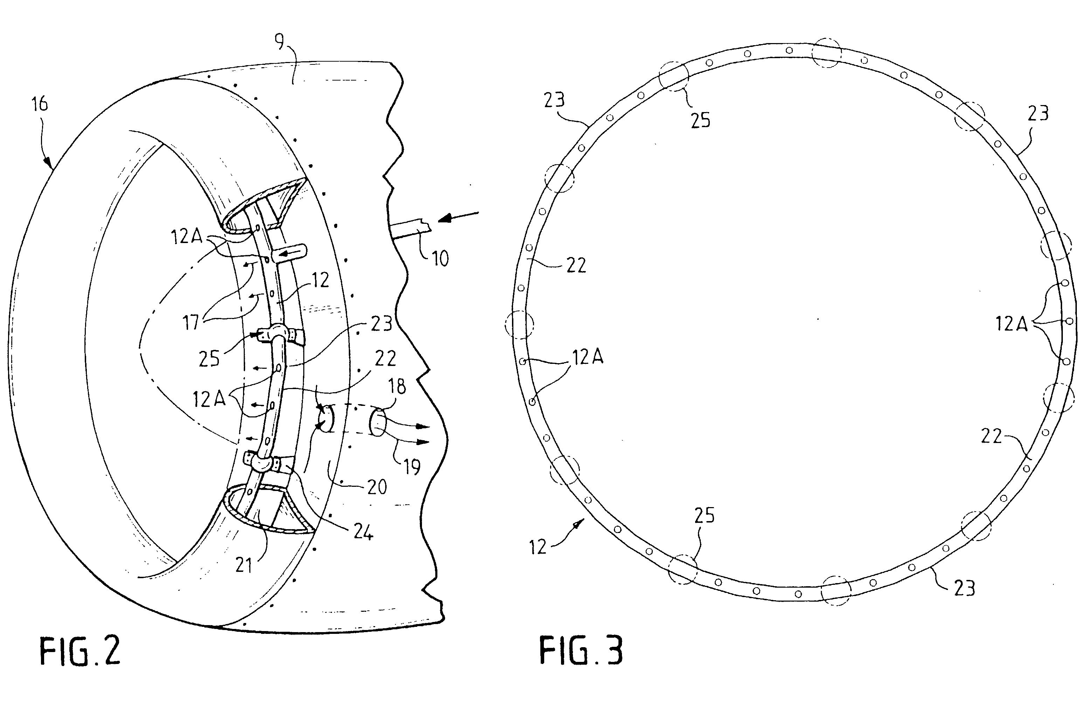

Comme cela est illustré schématiquement sur la figure 1, le capot d'entrée d'air 9 comporte une conduite interne 10, pourvue à son extrémité arrière dirigée vers le moteur 1 d'un élément de raccord 11 et à son extrémité avant d'un injecteur 12 logé dans le bord d'attaque creux 16 dudit capot d'entrée d'air. Cet injecteur 12 se présente sous la forme d'un diffuseur constitué par une tuyauterie annulaire pourvue d'une pluralité d'orifices 12A, répartis le long dudit diffuseur (voir la figure 2) et éventeullement pourvus de buses (non représentées).

Par ailleurs, sur un étage de compresseurs du moteur 1 est agencée une prise d'air chaud sous pression 13 qui est connectée à une conduite 14, pourvue, en regard de l'élément de raccord 11 de la conduite 10, d'un élément de raccord complémentaire 15.

Ainsi, lorsque les éléments de raccord 11 et 15 complémentaires sont reliés l'un à l'autre, de l'air chaud sous pression prélevé en 13 sur le moteur 1 est acheminé par les conduites 14 et 10 jusqu'au diffuseur 12. Celui-ci peut donc souffler, par ses orifices 12A, cet air chaud (flèches 17) à l'intérieur du bord d'attaque 16, pour le dégivrer. Un orifice 18 est prévu pour l'évacuation à l'air libre (flèches 19) de l'air chaud ayant circulé à l'intérieur du bord d'attaque 16.

Comme le montre la figure 2, le bord d'attaque creux 16 est fermé du côté arrière par une cloison interne 20, de sorte qu'une chambre périphérique annulaire interne 21 est formée à l'intérieur dudit bord d'attaque 16. Le diffuseur 12 est logé dans la chambre 21 et injecte l'air chaud dans celle-ci sur 360° et l'orifice 18 met en communication ladite chambre 21 avec l'extérieur, de sorte que ledit air chaud injecté par les orifices 12A est évacué à l'extérieur à travers l'orifice 18, après avoir réchauffé le bord d'attaque 16.

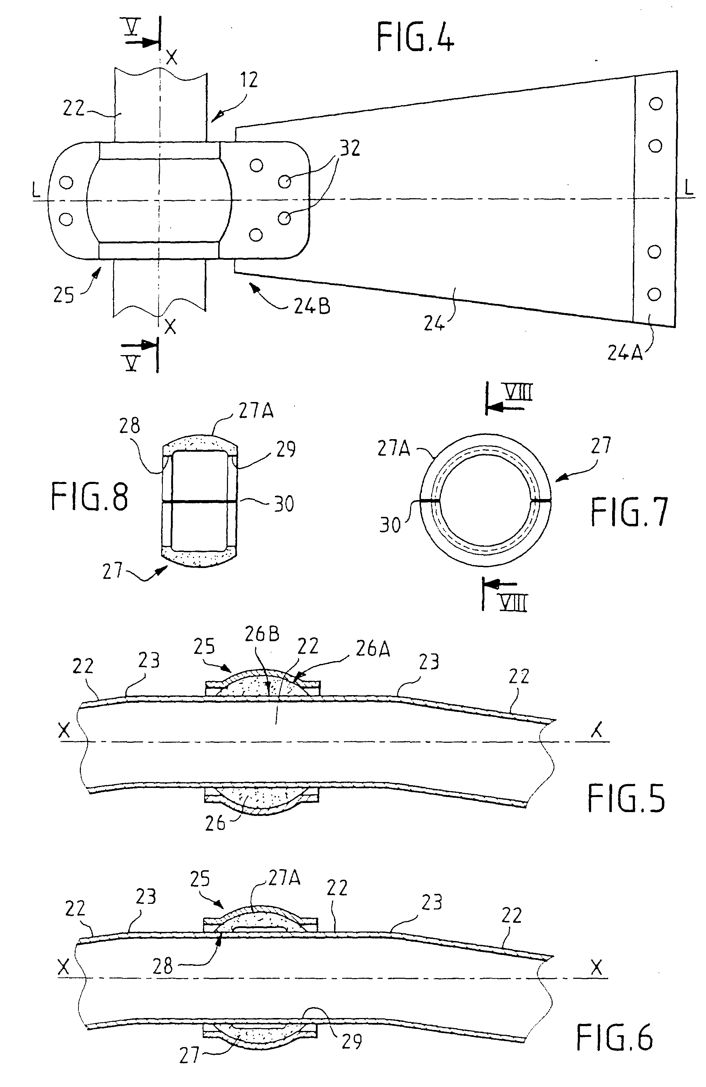

Le diffuseur annulaire 12 (voir également la figure 3) est polygonal et comporte une pluralité de tronçons rectilignes successifs 22, deux à deux reliés par un coude 23. Il est fixé à l'intérieur de la chambre annulaire interne 21 par des pattes de support plates 24, par exemple en acier à ressort, réparties le long du diffuseur annulaire 12, chaque patte 24 étant fixée à son extrémité arrière 24A à la cloison interne 20 et étant reliée à son extrémité avant 24B à l'un desdits tronçons rectilignes 22 dudit diffuseur par une articulation à rotule 25. Chaque patte de support place 24 a une direction longitudinale L-L au moins sensiblement orthogonale à l'axe X-X du tronçon rectiligne 22 du diffuseur 12 auquel elle est reliée (voir la figure 4) et elle est disposée de façon que son plan passe par l'axe X-X dudit tronçon (voir les figures 5, 6 et 9 à 14).

Pour former l'articulation à rotule 25, l'extrémité avant de chaque patte de support 24 porte une cavité sphérique (voir la figure 5) enserrant une garniture sphérique 26 ou 27, par exemple en bronze au béryllium, traversée par le tronçon rectiligne 22 correspondant dudit diffuseur 12.

Dans le mode de réalisation représenté sur la figure 5, la garniture sphérique 26 comporte une surface externe sphérique 26A serrée par la cavité sphérique de l'extrémité avant 24B de la patte de support 24 et un passage cylindrique interne 26B, dans lequel est serré ledit tronçon rectiligne 22 du diffuseur. Une garniture sphérique 26 est réalisée en deux demi-coquilles (de manière semblable à ce qui est montré sur les figures 7 et 8 pour la garniture 27), de manière à pouvoir être aisément mise en place sur ledit tronçon rectiligne 22.

Dans le mode de réalisation des figures 6, 7 et 8, la garniture sphérique 27, également en bronze au béryllium, comporte une surface externe sphérique 27A serrée par la cavité sphérique de l'extrémité avant 24B de la patte de support 24 et forme deux bagues cylindriques internes espacées 28 et 29, dans lesquelles est serré ledit tronçon rectiligne 22 du diffuseur 12. La garniture 27 est réalisée en deux demi-coquilles, assemblables le long d'un plan de joint 30.

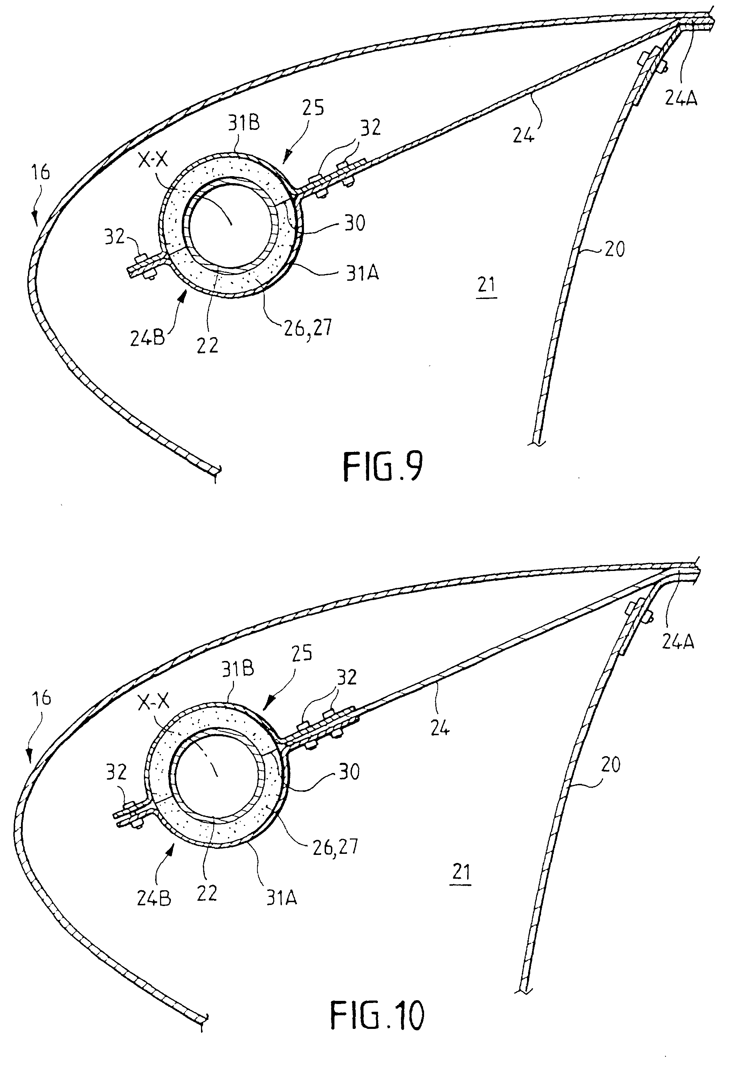

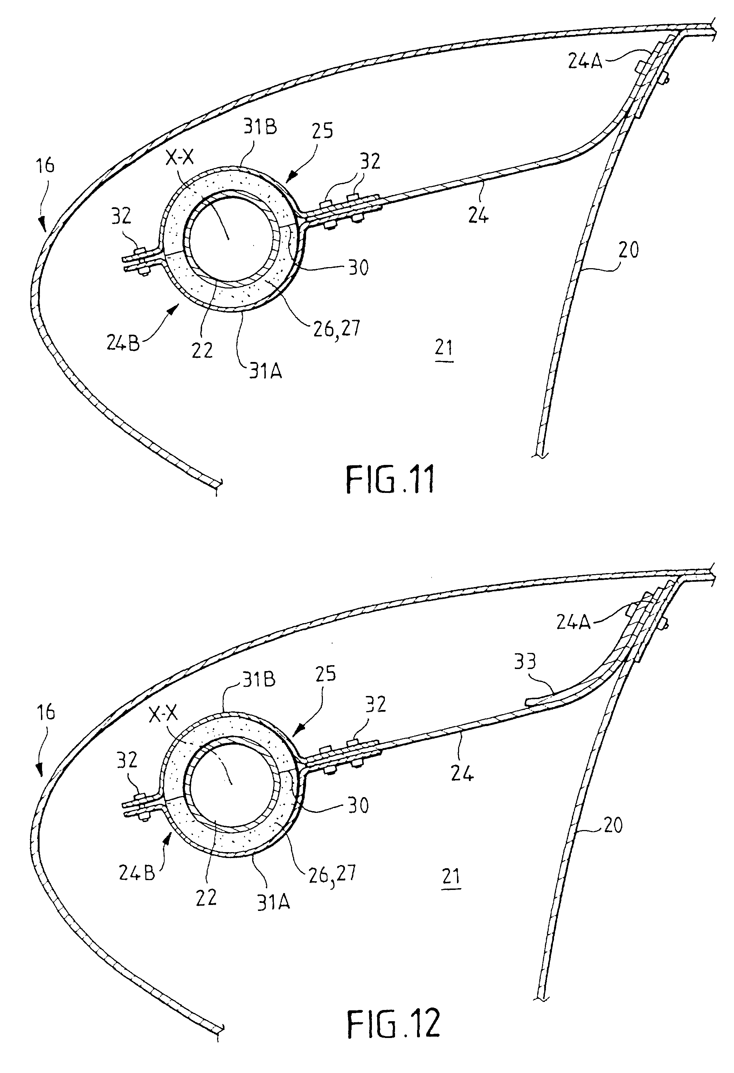

Comme on peut le voir sur la figure 9, l'extrémité arrière 24A des pattes 24 peut être fixée entre la peau du bord d'attaque 16 et la cloison 20. Par ailleurs, sur cette figure, la cavité sphérique de l'extrémité avant 24B des pattes de fixation 24 est formée par deux demi-coquilles sphériques 31A et 31B, dont l'une 31A est conformée directement dans ladite extrémité avant 24B des pattes 24 et dont l'autre est rapportée et fixée à cette dernière par des moyens de fixation 32. Dans la variante de réalisation de la figure 10, la demi-coquille 31A est également rapportée et fixée à la patte de fixation 24, tout comme la demi-coquille 31B. La figure 11 montre encore une autre variante, semblable à celle de la figure 10, sauf en ce qui regarde la fixation de l'extrémité arrière 24A des pattes de support 24 : dans ce cas, celles-ci ne sont plus fixées entre la peau du bord d'attaque 16 et la cloison interne 20, mais directement sur cette dernière. Comme le montre la figure 12, on peut prévoir une lame élastique de renfort 33, fixée sur la cloison 20 et en appui contre l'extrémité arrière 24A de la patte de support 24, pour en sugmenter la raideur.

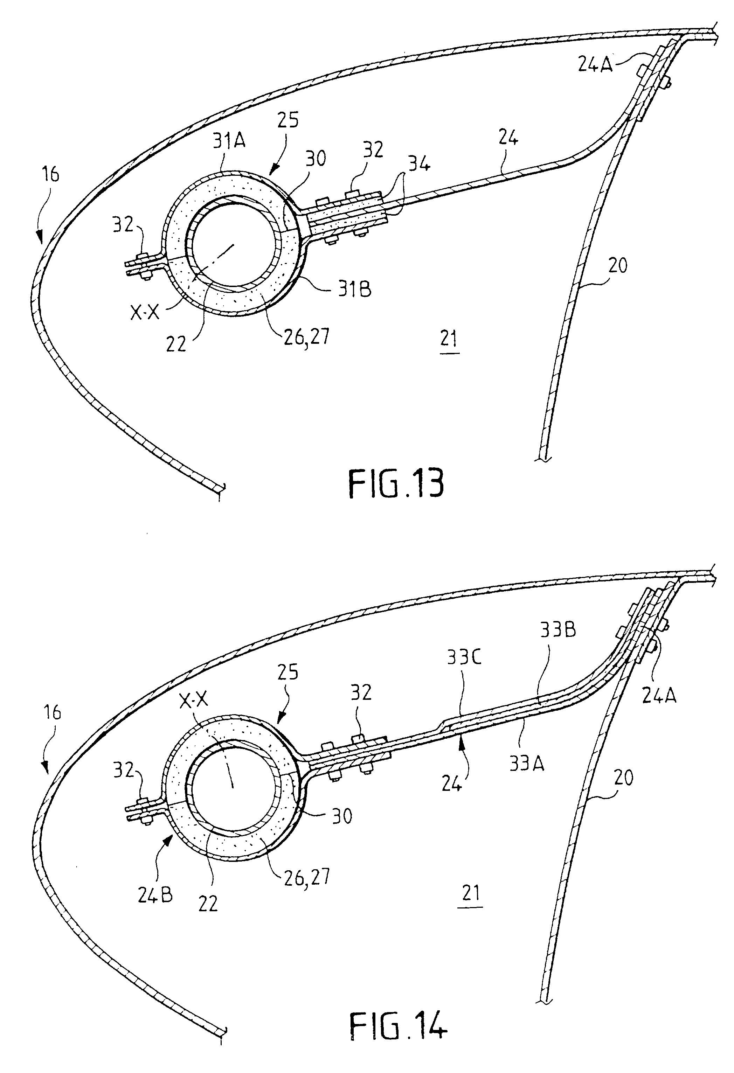

Dans le mode de réalisation de la figure 13, des éléments de serrage 34 en matière thermiquement isolante et/ou amortissant les vibrations sont prévus entre lesdites demi-coquilles 31A et 31B et la lame de support 24. On évite ainsi la propagation à la structure environnante des vibrations et/ou de la chaleur engendrées par le diffuseur 12. Sur la figure 14, on a représenté un mode de réalisation dans lequel les pattes 24 sont ccnstituées de plusieurs lames flexibles 33A, 33B, 33C superposées et de longueurs différentes, de façon que lesdites pattes 24 présentent une raideur croissant progressivement de leur extrémité avant 24B vers leur extrémité arrière 24A. Un tel mode de réalisation présente l'avantage supplémentaire de pouvoir interposer des couches de matière antivibratoire (non représentées) entre lesdites lames flexibles 33A, 333, 33C et donc d'amortir les vibrations engendrées par le diffuseur 12.

Par ailleurs, quel que soit le mode de réalisation des pattes de support 24, il peut être avantageux de les revêtir, totalement ou partiellement, d'une enveloppe de matière antivibratoire (par exemple un élastomère de type silicone) pour éviter leur mise en résonance et le transfert de vibrations. L'épaisseur et la forme d'un tel revêtement antivibratoire (non représenté) peuvent être variables.

## Revendications

1. Capot d'entrée d'air (9) pour moteur à réaction (1), notamment pour aéronef, ledit capot d'entrée d'air (9) étant pourvu de moyens de dégivrage de son bord d'attaque (16) et comportant à cet effet :
- un bord d'attaque (16) creux délimitant une chambre périphérlque annulaire interne (21), fermée par une cloison interne (20) et pourvue d'au moins un orifice (18) mettant en communication ladite chambre interne (21) avec l'extérieur ; et
- une conduite (10), apte à être raccordée, à son extrémité arrière opposée audit bord d'attaque (16), à un circuit d'air chaud sous pression (14) et, à son extrémité avant vers ledit bord d'attaque (16), à un diffuseur (12) constitué par une tuyauterie annulaire logée dans ladite chambre annulaire interne (21) et pourvue d'une pluralité d'orifices (12A), répartis le long dudit diffuseur et injectant ledit air chaud sous pression dans ladite chambre annulaire interne (21),
**caractérisé en ce que** :
- ledit diffuseur (12) est constitué de tronçons rectilignes (22) raccordés entre eux par des coudes (23) pour donner à ladite tuyauterie une forme annulaire polygonale ;
- ledit diffuseur (12) est fixé à l'intérieur de ladite chambre annulaire interne (21) par des pattes de support plates (24) réalisées en une matière élastique, chaque patte de support (24) étant fixée à son extrémité arrière (24A) à ladite cloison interne (20) et étant reliée à son extrémité avant (24B) à l'un desdits tronçons rectilignes (22) de ladite tuyauterie annulaire polygonale ;
- chaque patte de support plate (24) a une direction au moins sensiblement orthogonale à l'axe (X-X) dudit tronçon rectiligne (22) auquel elle est reliée et est disposée de façon que son plan soit au moins sensiblement parallèle audit axe (X-X) dudit tronçon (22) ; et
- l'extrémité avant (24B) de chaque patte de support (24) est reliée au tronçon rectiligne (22) correspondant de ladite tuyauterie annulaire polygonale par une articulation à rotule (25).

2. Capot d'entrée d'air selon la revendication 1, **caractérisé en ce que** le plan de chaque patte de support place (24) passe par l'axe (X-X) dudit tronçon rectiligne (22) correspondant.

3. Capot d'entrée d'air selon l'une des revendications 1 ou 2,
**caractérisé en ce que** l'extrémité avant (243) de chaque patte de support (24) comporte une cavité sphérique enserrant une garniture sphérique (26, 27) traversée par le tronçon rectiligne correspondant (22) dudit diffuseur (12).

4. Capot d'entrée d'air selon la revendication 3,
**caractérisé en ce que** ladite cavité sphérique et ladite garniture sphérique sont chacune constituées d'au moins deux parties complémentaires coopérantes.

5. Caoot d'entrée d'air selon l'une des ravendications 3 ou 4,
**caractérisé en ce que** ladite garniture sphérique (26) forme un passage cylindrique interne (26B), dans lequel est serré ledit tronçon rectiligne correspondant (22) dudit diffuseur (12).

6. Capot d'entrée d'air selon l'une des revandications 3 ou 4,
**caractérisé en ce que** ladite garniture sphérique (26) forme deux bagues cylindriques internes espacées (28, 29), dans lesquelles est serré ledit tronçon rectiligne correspondant (22) dudit diffuseur (12).

7. Capot d'entrée d'air selon l'une des revendications 3 à 6,
**caractérisé en ce que** ladite garniture sphérique (26, 27) est réalisée au moins en partie en une matière thermiquement isolante.

8. Capot d'entrée d'air selon l'une des revendications 3 à 7,
**caractérisé en ce que** ladite garniture sphérique (26, 27) est réalisée au moins en partie en une matière isolante en vibrations.

9. Capot d'entrée d'air selon l'une des revendications 1 à 8,
**caractérisé en ce que** l'extrémité arrière (24A) desdites pattes de support (24) est fixée directement sur ladite cloison interne (20).

10. Capot d'entrée d'air selon l'une des revendications 1 à 8,
**caractérisé en ce que** l'extrémité arrière (24A) desdites pattes de support (24) est fixée entre ledit bord d'attaque (16) et ladite cloison interne (20).

11. Capot d'entrée d'air selon l'une des revendications 4 à 10,
**caractérisé en ce que** ladite cavité sphérique est formée par au moins une partie (31A) conformée directement dans l'axtrémité avant (24B) desdites pattes de support (24) et une partie (31B) rapportée à cette dernière.

12. Capot d'entrée d'air selon l'une des revendications 4 à 10,
**caractérisé en ce que** ladite cavité sphérique est formés par au moins deux parties (31A et 31B) rapportées à l'extrémité avant (24B) dasdites pattes de support (24).

13. Capot d'entrée d'air selon l'une des revendications 1 à 12,
**caractérisé en ce que** lesdites pattes de support (24) présentent une raideur longitudinale constante.

14. Capot d'entrée d'air selon l'une des revendications 1 à 12,
**caractérisé en ce que** lesdites pattes de support (24) présentent une raideur longitudinale plus grande à leur extrémité arrière (24A) qu'à leur extrémité avant (24B).

15. Capot d'entrée d'air selon l'une des revennications 1 à 14,
**caractérisé en ce que** lesdites pattes de support (24) incorporent des éléments thermiquement peu conducteurs (34).

16. Capot d'entrée d'air selon l'une des ravandications 1 à 15,
**caractérisé en ce que** lesdites pattes de support (24) incorporent des éléments (34) susceptibles d'amortir les vibrations.

## Patentansprüche

1. Lufteinlasshaube (9) für ein Strahltriebwerk (1) insbesondere für Flugzeuge, wobei die genannte Lufteinlasshaube (9) mit Mitteln zur Enteisung ihrer Eintrittskante (16) versehen ist, die zu diesem Zweck Folgendes umfassen:
- eine hohle Eintrittskante (16), die eine ringförmige Umfangsinnenkammer (21) begrenzt, die durch eine Innentrennwand (20) verschlossen und mit mindestens einer Öffnung (18) versehen ist, die die Innenkammer (21) mit der Außenumgebung verbindet; und
- eine Leitung (10), die an ihrem hinteren, entgegengesetzt zur genannten Eintrittskante (16) liegenden Ende mit einem Heißdruckluftkreis (14) und an ihrem vorderen Ende zur genannten Eintrittskante (16) hin mit einem Diffusor (12) verbunden werden kann, der aus einer Ringleitung besteht, die sich in der Innenringkammer (21) befindet und mit mehreren Öffnungen (12A) versehen ist, die entlang des Diffusors verteilt sind und die heiße Druckluft in die Innenringkammer (21) einspritzen,
**dadurch gekennzeichnet,**
- **dass** der Diffusor (12) aus geraden Teilstücken (22) besteht, die untereinander mit Rohrkrümmern (23) verbunden sind, um der Rohrleitung eine mehreckige Ringform zu geben;
- **dass** der Diffusor (12) im Inneren der Innenringkammer (21) mit flachen Stützschellen (24) aus elastischem Material befestigt ist, wobei jede Stützschelle (24) an ihrem hinteren Ende (24A) an der Innentrennwand (20) befestigt und an ihrem vorderen Ende (24B) mit einem der geraden Teilstücken (22) der mehreckigen Ringleitung verbunden ist;
- **dass** jede flache Stützschelle (24) mindestens im Wesentlichen rechtwinklig zur Achse (X-X) des geraden Teilstücks (22), mit dem sie verbunden ist, ausgerichtet und so angeordnet ist, dass ihre Ebene mindestens im Wesentlichen parallel zur Achse (X-X) des Teilstücks (22) liegt; und
- **dass** das vordere Ende (24B) jeder Stützschelle (24) durch ein Kugelgelenk (25) mit dem entsprechenden geraden Teil (22) der mehreckigen Ringleitung verbunden ist.

2. Lufteinlasshaube gemäß Anspruch 1,
**dadurch gekennzeichnet, dass** die Ebene jeder flachen Stützschelle (24) durch die Achse (X-X) des entsprechenden geraden Teilstücks (22) verläuft.

3. Lufteinlasshaube gemäß Anspruch1 oder 2,
**dadurch gekennzeichnet, dass** das vordere Ende (24B) jeder Stützschelle (24) einen kugelförmigen Hohlraum umfasst, in dem sich eine Kugeldichtung (26, 27) befindet, durch die das entsprechende gerade Teilstück (22) des Diffusors (12) verläuft.

4. Lufteinlasshaube gemäß Anspruch 3,
**dadurch gekennzeichnet, dass** der kugelförmige Hohlraum und die Kugeldichtung jeweils aus mindestens zwei zusammenwirkenden komplementären Teilen bestehen.

5. Lufteinlasshaube gemäß Anspruch 3 oder 4,
**dadurch gekennzeichnet, dass** die Kugeldichtung (26) eine zylindrische Innendurchführung (26B) bildet, in dem das entsprechende gerade Teilstück (22) des Diffusors (12) geklemmt ist.

6. Lufteinlasshaube gemäß Anspruch 3 oder 4,
**dadurch gekennzeichnet, dass** die Kugeldichtung (26) zwei zylindrische, mit Zwischenraum angeordnete Innenringe (28, 29) bildet, in denen das entsprechende gerade Teilstück (22) des Diffusors (12) geklemmt ist.

7. Lufteinlasshaube gemäß einem der Ansprüche 3 bis 6,
**dadurch gekennzeichnet, dass** die Kugeldichtung (26) mindestens zum Teil aus einem wärmeisolierenden Material besteht.

8. Lufteinlasshaube gemäß einem der Ansprüche 3 bis 7,
**dadurch gekennzeichnet, dass** die Kugeldichtung (26, 27) mindestens zum Teil aus einem schwingungsisolierenden Material besteht.

9. Lufteinlasshaube gemäß einem der Ansprüche 1 bis 8,
**dadurch gekennzeichnet, dass** das hintere Ende (24A) der Stützschellen (24) direkt an der Innentrennwand (20) befestigt ist.

10. Lufteinlasshaube gemäß einem der Ansprüche 1 bis 8,
**dadurch gekennzeichnet, dass** das hintere Ende (24A) der Stützschellen (24) zwischen der Eintrittskante (16) und der Innentrennwand (20) befestigt ist.

11. Lufteinlasshaube gemäß einem der Ansprüche 4 bis 10,
**dadurch gekennzeichnet, dass** der kugelförmige Hohlraum von mindestens einem Teil (31A), der direkt im vorderen Ende (24B) der Stützschellen (24) geformt ist, und einem an dieses Ende angesetzten Teil (31B) gebildet wird.

12. Lufteinlasshaube gemäß einem der Ansprüche 4 bis 10,
**dadurch gekennzeichnet, dass** der kugelförmige Hohlraum von mindestens zwei Teilen (31A und 31B) gebildet wird, die an das vordere Ende (24B) der Stützschellen (24) angesetzt sind.

13. Lufteinlasshaube gemäß einem der Ansprüche 1 bis 12,
**dadurch gekennzeichnet, dass** die Stützschellen (24) eine konstante Längssteifigkeit besitzen.

14. Lufteinlasshaube gemäß einem der Ansprüche 1 bis 12,
**dadurch gekennzeichnet, dass** die Stützschellen (24) an ihrem hinteren Ende (24A) eine größere Längssteifigkeit aufweisen als an ihrem vorderen Ende (24B).

15. Lufteinlasshaube gemäß einem der Ansprüche 1 bis 14,
**dadurch gekennzeichnet, dass** die Stützschellen (24) Elemente mit geringer Wärmeleitfähigkeit (34) umfassen.

16. Lufteinlasshaube gemäß einem der Ansprüche 1 bis 15,
**dadurch gekennzeichnet, dass** die Stützschellen (24) Elemente (34) umfassen, die Schwingungen dämpfen können.

## Claims

1. Air inlet cowl (9) for a jet engine (1), especially for an aircraft, said air inlet cowl (9) being equipped with means for de-icing its leading edge (16) and comprising, for this purpose:
- a hollow leading edge (16) delimiting an annular internal peripheral chamber (21) which is closed by an internal partition (20) and equipped with at least one orifice (18) placing said internal chamber (21) in communication with the outside; and
- a pipe (10) which can be connected, at its rear end away from said leading edge (16), to a pressurized hot air circuit (14) and, at its front end toward said leading edge (16), to a diffuser (12) consisting of annular pipework housed in said annular internal chamber (21) and equipped with a number of orifices (12A) distributed along said diffuser and injecting said pressurized hot air into said annular internal chamber (21),
**characterized in that**:
- said diffuser (12) consists of straight portions (22) joined together by elbows (23) to give said pipework a polygonal annular shape;
- said diffuser (12) is fixed inside said annular internal chamber (21) by flat support tabs (24) made of an elastic material, each support tab (24) being fixed at its rear end (24A) to said internal partition (20) and being connected at its front end (24B) to one of said straight portions (22) of said polygonal annular pipework;
- each flat support tab (24) has a direction at least essentially orthogonal to the axis (X-X) of said straight portion (22) to which it is connected and is arranged in such a way that its plane is at least essentially parallel to said axis (X-X) of said portion (22); and
- the front end (24B) of each support tab (24) is connected to the corresponding straight portion (22) of said polygonal annular pipework by a ball joint (25).

2. Air inlet cowl according to Claim 1,
**characterized in that** the plane of each flat support tab (24) passes through the axis (X-X) of said corresponding straight portion (22).

3. Air inlet cowl according to either of Claims 1 and 2,
**characterized in that** the front end (24B) of each support tab (24) comprises a spherical cavity enclosing a spherical lining (26, 27) through which the corresponding straight portion (22) of said diffuser (12) passes.

4. Air inlet cowl according to Claim 3,
**characterized in that** said spherical cavity and said spherical lining each consist of at least two cooperating complementary parts.

5. Air inlet cowl according to either of Claims 3 and 4,
**characterized in that** said spherical lining (26) forms a cylindrical internal passage (26B) in which said corresponding straight portion (22) of said diffuser (12) is held.

6. Air inlet cowl according to either of Claims 3 and 4,
**characterized in that** said spherical lining (26) forms two spaced-apart cylindrical internal rings (28, 29) in which said corresponding straight portion (22) of said diffuser (12) is held.

7. Air inlet cowl according to one of Claims 3 to 6,
**characterized in that** said spherical lining (26, 27) is made at least in part from a thermally insulating material.

8. Air inlet cowl according to one of Claims 3 to 7, **characterized in that** said spherical lining (26, 27) is made at least in part from a vibration-insulating material.

9. Air inlet cowl according to one of Claims 1 to 8,
**characterized in that** the rear end (24A) of said support tabs (24) is fixed directly to said internal partition (20).

10. Air inlet cowl according to one of Claims 1 to 8,
**characterized in that** the rear end (24A) of said support tabs (24) is fixed between said leading edge (16 ) and said internal partition (20).

11. Air inlet cowl according to one of Claims 4 to 10,
**characterized in that** said spherical cavity is formed by at least one part (31A) formed directly in the front end (24B) of said support tabs (24) and a part (31B) attached thereto.

12. Air inlet cowl according to one of Claims 4 to 10,
**characterized in that** said spherical cavity is formed by at least two parts (31A and 31B) attached to the front end (24B) of said support tabs (24).

13. Air inlet cowl according to one of Claims 1 to 12,
**characterized in that** said support tabs (24) have a constant longitudinal stiffness.

14. Air inlet cowl according to one of Claims 1 to 12,
**characterized in that** said support tabs (24) have a longitudinal stiffness which is greater at their rear end (24A) than at their front end (24B).

15. Air inlet cowl according to one of Claims 1 to 14,
**characterized in that** said support tabs (24) incorporate elements (34) which are poor conductors of heat.

16. Air inlet cowl according to one of Claims 1 to 15,
**characterized in that** said support tabs (24) incorporate elements (34) which are capable of damping vibrations.
